# EUROPÄISCHE PATENTSCHRIFT

(11) **EP 1 944 078 B1**
(45) Veröffentlichungstag und Bekanntmachung des Hinweises auf die Patenterteilung: **02.03.2011**
(21) Anmeldenummer: 07000433.8
(22) Anmeldetag: 10.01.2007
(51) Int. Cl.: B01F 13/00, B01F 13/08, B01L 3/00, G01N 33/543

(54) **Vorrichtung zum Bestimmen eines Analyts in einer Flüssigkeit und Verfahren**
Device for determining an analyte in a liquid and method
Dispositif destiné à la détermination d'un analyte dans un liquide et procédé

(43) Veröffentlichungstag der Anmeldung: 16.07.2008
(73) Patentinhaber: F.Hoffmann-La Roche AG, 4070 Basel (CH); Roche Diagnostics GmbH, 68305 Mannheim (DE)
(72) Erfinder: Ritter, Christoph, Dr., 8045 Graz (AT); Schweiger, Gert, D.I., 8010 Graz (AT); Kotnig, Thomas, 8053 Graz (AT); Oranth, Norbert, Dr., 68493 Hirschberg (DE); Mangold, Dieter, Dr., 67133 Maxdorf (DE); Winckler-Desprez, Valerie, Dr., 68526 Ladenburg (DE); Brauner, Michael, 68642 Bürstadt (DE)
(74) Vertreter: Bittner, Thomas L.

(56) Entgegenhaltungen:
- EP-A1- 0 545 284
- WO-A1-02/054417
- JP-A- 2006 266 836
- K. SUK ET AL: "Micro magnetic stir-bar mixer integrated with parylene microfluidic channels" LAB CHIP 2004, Bd. 4, 14. Oktober 2004 (2004-10-14), Seiten 608-613, XP002435817

## Beschreibung

Die Erfindung betrifft eine Vorrichtung zum Bestimmen eines Analyts in einer Flüssigkeit und ein Verfahren.

### Hintergrund der Erfindung

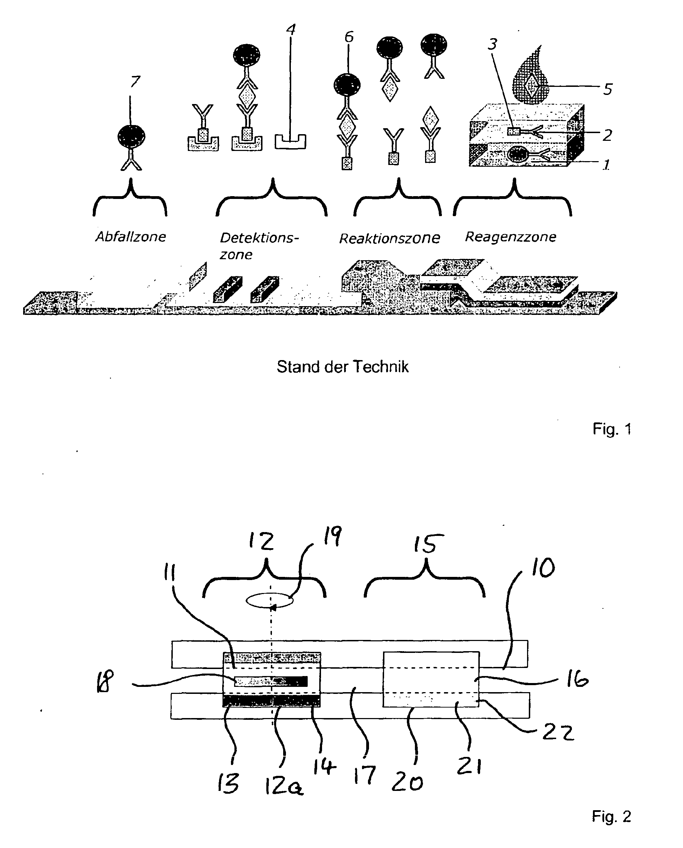

Eine solche Vorrichtung zum Bestimmen eines Analyts in einer Flüssigkeit ist zum Beispiel in Form von Teststreifen oder Testsystemen bekannt, wie sie auch unter der Bezeichnung "Roche Cardiac Reader" vertrieben werden. Fig. 1 zeigt einen bekannten Teststreifen, welcher über mehrere verbundene Vliese verfügt und auf dem eine Reagenzzone und eine Detektionszone gebildet sind. In der Reagenzzone liegen ein oder mehrere Reagenzien 1, 2 vor, die mit dem zu bestimmenden Analyt 5 reagieren, beispielsweise einem in der Flüssigkeit vorhandenen Antigen wie Troponin. Zum Bestimmen des Analyts 5 wird eine Probe der Flüssigkeit auf ein Abtrennvlies an der Reagenzzone aufgebracht, wonach die Flüssigkeit, beispielsweise eine Blutprobe, in das Vliesmaterial eindringt. Im Fall der Blutprobe bleiben dann zelluläre Bestandteile zurück. In der auf dem Teststreifen gebildeten Reaktionszone reagieren der zu bestimmende Analyt 5 und das eine oder die mehreren Reagenzien 1, 2 unter Bildung mindestens eines Reaktionsproduktes 6. Bei der dargestellten Ausführung nach dem Stand der Technik handelt es sich bei einem ersten Reagenz 1 um ein Konjugat aus einem ersten Antikörper und Goldpartikeln. Ein zweites Reagenz 2 ist ein mit Biotin 3 markierter Antikörper. In der Detektionszone liegt an ein Vliesmaterial gebundenes Streptavidin 4 vor.

Bei der Reaktion des zu bestimmenden Analyts 5 mit dem ersten und dem zweiten Reagenz 1, 2 entsteht das Reaktionsprodukt 6, bei dem es sich um eine sandwichartige Verbindung handelt. Mittels Kapillarkräften wird die Flüssigkeit entlang des Teststreifens durch die verschiedenen Vliesabschnitte transportiert, wobei das Reaktionsprodukt 6 mittels des Biotinrestes 3 am Streptavidin 4 in der Detektionszone gebunden wird. Ungebundene Reste 7 werden in dem Teststreifen über die Detektionszone hinaus zu einer Abfallzone weitertransportiert. Sodann kann der Analyt 5 in der Detektionszone nachgewiesen werden, beispielsweise mittels eines quantitativen Nachweises auf Basis von Remissionsmessungen der Absorptionswerte in der Detektionszone. Andere Verfahren zum Nachweis des Reaktionsproduktes basieren auf elektrochemischen, anderen optischen oder physikalischen Methoden.

Eine weitere Ausführung eines bekannten Teststreifens ist beispielsweise in dem Dokument EP 1 061 369 A2 beschrieben.

Die bekannten Teststreifen auf Basis von Vliesmaterialien haben allerdings den Nachteil, dass ein großer Anteil der aufgebrachten Probe der Flüssigkeit innerhalb des Vliesmaterials verloren geht. Es ist deshalb notwendig, für die durchzuführende Analyse eine erheblich größere Probenmenge aufzubringen, als dies für die eigentliche Bestimmung des Analyts notwendig wäre. Zur Vermeidung dieses Nachteils wurden Vorrichtungen mit einer räumlichen Struktur vorgeschlagen, bei denen die Reagenzzone, die Reaktionszone, die Detektionszone und gegebenenfalls die Abfallzone als Bereiche oder Abschnitte der räumlichen Struktur hintereinander geschaltet und über eine Kanalstruktur miteinander in Fluidverbindung stehen. Es entstehen so Testelemente oder -systeme mit kanalförmigen Strukturen. In Analogie zu den Teststreifen werden in einer Ausgestaltung bei der Bestimmung ein erstes und ein zweites Reagenz mit der Probe der Flüssigkeit in der kanalförmigen Struktur vermischt, wonach der Analyt in der Flüssigkeit mit den beiden Reagenzien zu einem Reaktionsprodukt reagiert.

Als weitere Zone kann in der räumlichen Struktur eine Fängerzone vorgesehen sein. Hierbei handelt es sich um einen Abschnitt der räumlichen Struktur, in welchem beispielsweise das zweite Reagenz immobilisiert ist, sodass ein zuvor in einer Reaktion gebildeter und somit ein Reaktionsprodukt darstellender Komplex aus dem zu bestimmenden Analyt und dem ersten Reagenz hieran bindet. Das als Antikörper gebildete, zweite Reagenz kann direkt auf einer Oberfläche im Bereich der Fängerzone der räumlichen Struktur immobilisiert sein. Alternativ kann auch ein zum Beispiel mit Biotin oder in äquivalenter Art und Weise markierter Antikörper an den mit einem geeigneten Rezeptor beschichteten Abschnitt der Fängerzone immobilisiert werden. Der als Fängerzone gebildete Abschnitt der räumlichen Struktur kann eine ebene Fläche oder eine dreidimensionale räumliche Struktur sein. Beispiele für eine räumlich ausgebildete Fängerzone sind poröse Schichten, zum Beispiel aus einem Vlies, oder hydrophile Polymere, zum Beispiel Gele.

Die räumliche Struktur zum Ausbilden der Kombination von verschiedenen Zonen für die Testsysteme kann zum Beispiel in Mikrotiterplatten gebildet werden. Die räumliche Struktur kann bevorzugt als mikrofluidische Struktur ausgeführt sein. Die Ausbildung solcher Strukturen kann in verschiedenen Materialien unter Verwendung unterschiedlicher Herstellungsverfahren erfolgen, beispielsweise mittels Laserstrukturbearbeitung oder Spritzgießtechniken. Die verschiedenen Ausführungsformen ist gemeinsam, dass die Probe der Flüssigkeit mit dem zu bestimmenden Analyt in Kontakt mit einem oder mehreren mit dem Analyt reagierenden Reagenzien gebracht werden muss. Zu diesem Zweck ist in dem Dokument WO 98 / 43739 beispielsweise vorgesehen, dass ein oder mehrere Reagenzien im Bereich eines Oberflächenabschnitts eines Kapillarbereiches einer räumlichen Struktur angeordnet sind, welcher von der Probe der Flüssigkeit durchströmt wird. Auf diese Weise werden bei der bekannten Testvorrichtung ein Targetligand oder ein Konjugat an den Oberflächenabschnitten immobilisiert.

Andererseits ist es bekannt, in räumlichen Strukturen, in welchen eine oder mehrere Flüssigkeiten eingebracht werden, Mischzonen vorzusehen, um verschiedene Flüssigkeiten untereinander oder ein oder mehrere Flüssigkeiten mit Trockensubstanzen zu mischen. Hierbei unterscheiden sich die Bedingungen und somit die Mischprozesse im einzelnen in Abhängigkeit von den Dimensionen der räumlichen Struktur. Bei Mikrostrukturen oder mikrofluidischen Strukturen treten Besonderheiten auf, da Bedingungen einer niedrigen Reynolds-Zahl entsprechend vorherrschen (vgl. K. Suk et al.: "Micro magnetic stir-bar mixer integrated with parylene mircofluidic channels", Lab Chip 2004, 4, S. 608-613). Es wurde vorgeschlagen, Magnetrührer in mikrofluidischen Strukturen zum Rühren von Flüssigkeiten zu nutzen. Hierbei ist ein Rührelement in der mikrofluidischen Struktur angeordnet und wird mit Hilfe eines äußeren Magnetfeldes angetrieben. Eine auf einem ähnlichen Wirkprinzip basierende Mischeinrichtung ist in dem Dokument US 5,028,142 offenbart, die unter anderem für immunologische Agglutinationsassays verwendet werden kann.

In dem Dokument US 5,222,808 wird eine Vorrichtung vorgeschlagen, die zur Untersuchung von flüssigen biologischen Proben verwendet werden kann. Der Flüssigkeitstransport in der Vorrichtung beruht dabei auf Kapillarkräften. In einer Mischkammer der Vorrichtung können mit Hilfe von Magnetpartikeln Reagenzien, die in der Mischkammer vorhanden sind, mit der Probe vermischt werden. Die Untersuchung der Probe kann in der Mischkammer selbst oder einer nachgelagerten Detektionszone mittels optischer Methoden erfolgen.

Das Dokument EP 0 545 284 A1 offenbart eine Probenmessvorrichtung gemäß dem Oberbegriff des Anspruchs 1, mit einer Injizieröffnung zum Injizieren einer Probe, einem Strömungskanalabschnitt, durch den die injizierte Probe strömt und einer Mikropumpe zum Transportieren der Probe innerhalb des Strömungskanalabschnitts, wobei die Probenmessvornchtung ein piezoelektrisches Element aufweist.

Das Dokument JP 2006 266836 A offenbart eine Vorrichtung mit einer Rühreinrichtung, welche mit Hilfe von magnetischen Kugeln oder Kügelchen gebildet ist, wobei auf der Kugeloberfläche ein Reagenz oder ein Enzym immobilisiert angeordnet sein kann.

### Zusammenfassung der Erfindung

Aufgabe der Erfindung ist es, eine Vorrichtung und ein Verfahren zum Bestimmen eines Analyts zu schaffen, bei denen das Bestimmen des Analyts mit Hilfe eines möglichst geringen Probenvolumens sowie mit hoher Genauigkeit und Sensitivität ausführbar ist.

Die Erfindung wird durch eine Vorrichtung zum Bestimmen eines Analyts in einer Flüssigkeit nach dem unabhängigen Anspruch 1 gelöst. Weiterhin ist ein Verfahren zum Bestimmen eines Analyts in einer Flüssigkeit nach dem unabhängigen Anspruch 19 geschaffen.

Mit Hilfe der Erfindung ist die Möglichkeit geschaffen, die zum Bestimmen des Analyts notwendige Reaktion zwischen Analyt und dem mindestens einem mit dem Analyt reagierenden Reagenz mit großer Effizienz auszuführen, indem der Kontakt zwischen dem mindestens einem Reagenz und dem Analyt mittels Rühren in der Rührzone optimiert wird. Die Flüssigkeit umströmt beim Rühren fortdauernd die mit dem mindestens einem Analyt beladene Rühreinrichtung. Es wird so erreicht, dass kontinuierlich ein lokaler Teilchenaustausch in Teilvolumina der Rührzone stattfindet, so dass die Wahrscheinlichkeit für das Zusammentreffen von noch nicht miteinander reagierten Partikeln des mindestens einen Reagenz einerseits und der Probe der Flüssigkeit andererseits erhöht wird. Hierbei können die Probe der Flüssigkeit und das mindestens eine Reagenz direkt miteinander vermischt werden oder auch nur in einem Grenzflächenbereich in Kontakt gebracht werden. Letzteres ist beispielsweise in einer möglichen Ausführung der Fall, wenn das mindestens eine Reagenz auf der Rühreinrichtung dauerhaft immobilisiert ist. Insgesamt wird so das vorhandene Volumen der Probe der Flüssigkeit effizient für den Nachweis des Analyts genutzt, was es ermöglicht, das notwendige Probevolumen möglichst gering zu halten.

Die erfindungsgemäße Vorrichtung und das erfindungsgemäße Verfahren eignen sich beispielsweise zum Bestimmen von Analyten in biologischen Proben, insbesondere in Blut und daraus abgeleiteten Probenmaterialien wie Serum und Plasma, Urin, Speichel, Schweiß oder dergleichen. Die Analyte können hierbei beispielsweise mittels enzymatischer oder auf spezifischen Bindereaktionen basierender Prinzipien getestet werden. Typischerweise sind dies immunologische Testprinzipien oder Testprinzipien, die auf der Bindung komplementärer Nukleinsäuren beruhen. Als Analyten kommen insbesondere in Frage Metaboliten, zum Beispiel Glukose, Laktat, Cholesterin, Kreatinin und dergleichen, oder immunologisch aktive Substanzen wie Antigene, Antikörper oder Haptene. Bevorzugt werden immunologisch nachweisbare Markersubstanzen nachgewiesen, beispielsweise Troponin T, Troponin I, BNP, NTproBNP, Myoglobin, D-Dimer, CK-MB oder dergleichen. Die Nachweisprinzipien und die dazugehörigen Reagenzien, insbesondere biochemische Reagenzien wie Enzyme, Antikörper, Antigene oder markierte Substanzen, sind dem Fachmann als solche bekannt.

Magnetstreifenabschnitte können zum Beispiel unter Verwendung von Magnetbändern gebildet werden, wie sie für Tonbänder oder Videobänder bekannt sind. Im Allgemeinen geeignet sind auf Kunststofffolien oder -plättchen befindliche Magnetschichten, die nachfolgend auch als "Folie mit Magnetschicht" bezeichnet werden. Als geeignet hat sich beispielsweise ein Poylesterband mit Magnetschicht (Tonband) mit einer Gesamtdicke von 0,045 mm (CMC Klebetechnik GmbH) herausgestellt, das gegebenenfalls auch ein selbstklebendes Polyesterband sein kann.

Eine bevorzugte Weiterbildung der Erfindung sieht vor, dass die Rühreinrichtung Porenstrukturen mit Poren aufweist, in welche des mindestens eine mit dem Analyten reagierende Reagenz zumindest teilweise eingelagert ist. Porenstrukturen können beispielsweise zur Verfügung gestellt werden, indem vliesartige Materialien oder Gewebematerialien für die Rühreinrichtung verwendet werden. Als besonders geeignet haben sich Membranmaterialien herausgestellt, insbesondere Nitrozellulosemembranen wie die verstärkte Nitrozellulosemembran Purabind A-RP (Porengröße 8 µm) der Firma Whatman.

Bei einer zweckmäßigen Ausgestaltung der Erfindung ist vorgesehen, dass die Rühreinrichtung eine magnetische Rühreinrichtung ist.

Eine vorteilhafte Ausfiihrungsform der Erfindung sieht vor, dass die magnetische Rühreinrichtung Magnetpartikel umfasst, die sich beim Anlegen eines äußeren Feldes zu von Gruppen der Magnetpartikel gebildeten Rührerelementen zusammenlagern. Hierdurch werden die Rührelemente beispielsweise von stabförmigen Strukturen gebildet, im Unterschied zu anderen Ausführungsformen, beispielsweise blattförmigen Rührelementen.

Bei einer vorteilhaften Ausgestaltung der Erfindung kann vorgesehen sein, dass die Rühreinrichtung mindestens ein Rührerteilelement aus der folgenden Gruppe von Rührerteilelementen aufweist: einen laminierten Abschnitt, einen Gewebeabschnitt, einen Vliesabschnitt, einen Membranabschnitt und einen Folienabschnitt. Als Materialien für diese Abschnitte sind beispielsweise geeignet Glasfaservliese, doppelseitige Klebebänder oder Polyesterbänder mit Magnetschicht oder selbstklebende Polyesterbänder mit Magnetschicht sowie verstärkte Nitrozellulosemembranen.

Eine bevorzugte Weiterbildung der Erfindung sieht vor, dass die Rühreinrichtung zumindest in Teilbereichen eine Beschichtung aufweist, die wahlweise haftvermittelnd für das mindestens eine mit dem Analyten reagierende Reagenz ist.

Bei einer zweckmäßigen Ausgestaltung der Erfindung kann vorgesehen sein, dass das mindestens eine mit dem Analyten reagierende Reagenz als mindestens ein Trockenreagenz an der Rühreinrichtung gebildet ist.

Eine vorteilhafte Ausführungsform der Erfindung sieht vor, dass das mindestens eine mit dem Analyten reagierende Reagenz in einer Schichtanordnung an der Rühreinrichtung gebildet ist, die eine Oberfläche der Rühreinrichtung zumindest teilweise bedeckt.

Bevorzugt sieht eine Fortbildung der Erfindung vor, dass die Schichtanordnung sich überlagernde Schichten verschiedener, mit dem Analyten reagierender Reagenzien aufweist.

Bei einer vorteilhaften Ausgestaltung der Erfindung kann vorgesehen sein, dass die verschiedenen, mit dem Analyten reagierenden Reagenzien in Schichten der Schichtanordnung unterschiedliche Löslichkeiten beim Rühren der Probe der Flüssigkeit mit der Rühreinrichtung aufweisen. Hierdurch ist es ermöglicht, mehrere Reagenzien nacheinander, einem gewünschten Reaktionsverlauf entsprechend beim Rühren der Probe der Flüssigkeit in den Reaktionsverlauf einzubinden. So kann vorgesehen sein, dass sich eine oder mehrere Schichten von Reagenzien von der Rühreinrichtung lösen, wohingegen eine unterste Schicht der Schichtanordnung im wesentlichen vollständig an der Rühreinrichtung verbleibt, also durch die Flüssigkeit nicht lösbar ist, und so zum Beispiel als Fängerreagenz für eine Fängerzone wirken kann. Beispielsweise kann auf der Rühreinrichtung fest immobilisiert ein gegen einen Analyten gerichteter Antikörper vorliegen, gegebenenfalls über eine Biotin-Streptavidin-Wechselwirkung immobilisiert, während ein mit einem optisch oder visuell detektierbaren Label gekennzeichneter Antikörper löslich auf der Rühreinrichtung vorliegt. Insbesondere im Fall von flächigen Rühreinrichtungen kann das lösliche Reagenz auf einer Seite der Rühreinrichtung vorhanden sein, während das immobilisierte Reagenz auf der gegenüberliegenden Seite der flächigen Rühreinrichtung aufgebracht ist. Bei der Verwendung des mindestens einen mit dem Analyten reagierenden Reagenz, derart, dass das mindestens eine Reagenz beim Rühren der Probe der Flüssigkeit im Wesentlichen nicht lösbar von der Rühreinrichtung ist, ist auf diese Weise eine Fängerzone auf der Rühreinrichtung gebildet, in deren Bereich sich das zu bestimmende Analyt anlagert. Bei einem solchen gebundenen Reagenz handelt es sich beispielsweise um Streptavidin. So kann zum Beispiel ein Teil der Oberfläche der Rühreinrichtung der Art mit Streptavidin beschichtet sein, dass ein mit Biotin markierter Antikörper eines anderen Reagenz oder die mit Biotin markierte, sandwichartige Verbindung, wie sie eingangs beschrieben wurde, an das auf der Oberfläche aufgebrachte Streptavidin bindet. Bei dem gebundenen Reagenz kann es sich auch um einen Antikörper handeln. Beispielsweise kann es sich bei dem Analyt um Troponin I oder Troponin T handeln, und der oder die hierzu korrespondierenden Antikörper sind poly- oder monoklonale Antikörper gegen Troponin I oder Troponin T. In analoger Weise können andere Analyte, beispielsweise andere kardiale oder neurohormonale Marker mit entsprechenden Antikörpern oder Antikörperpaaren nachgewiesen werden. Die Antikörper können in an sich bekannter Weise auf der Rühreinrichtung immobilisiert sein.

Weiterhin kann vorgesehen sein, dass nur ein Teil der für den Analytnachweis benötigten Reagenzien auf der Rühreinrichtung immobilisiert ist, während ein anderer Teil der Reagenzien der Probe anderweitig zugeführt wird, beispielsweise indem das Reagenz der Probe zugesetzt wird oder in der räumlichen Struktur, in die die Probe zugegeben wird, in löslicher Form vorliegt.

Eine Weiterbildung der Erfindung kann vorsehen, dass in der räumlichen Struktur weiterhin eine Reaktionszone gebildet ist. Im Bereich der Reaktionszone findet zumindest eine Reaktion zwischen dem mindestens einen Reagenz und dem zu bestimmenden Analyt statt.

Eine bevorzugte Weiterbildung der Erfindung sieht vor, dass in der räumlichen Struktur weiterhin eine Detektionszone gebildet ist. In der Detektionszone ist ein Produkt der Reaktion zwischen dem mindestens einen Reagenz und dem zu bestimmenden Analyt oder ein hiervon abgeleitetes, weiteres Reaktionsprodukt zum Nachweis des Analyts detektierbar, mittels eines oder mehrerer der folgenden Verfahren: optisches Detektionsverfahren, elektrochemisches Detektionsverfahren und physikalische Detektionsverfahren. Bevorzugte optische Detektionsverfahren beruhen auf der Messung der Absorption, der Transmission, der Reflexion, der Remission, der Streuung, der Lumineszenz oder dergleichen. Bevorzugt werden die Remission oder die Lumineszenz gemessen, insbesondere die Fluoreszenz. Bevorzugte elektrochemische Detektionsverfahren beruhen auf Amperometrie, Potentiometrie oder Konduktometrie.

Bei einer zweckmäßigen Ausgestaltung der Erfindung kann vorgesehen sein, dass in der räumlichen Struktur weiterhin eine Abfallzone gebildet ist.

Eine vorteilhafte Ausführungsform der Erfindung sieht vor, dass in der räumlichen Struktur weiterhin eine Fängerzone gebildet ist, in welcher ein Fängerreagenz immobilisiert ist. Das Fängerreagenz ist auf der Wandung der räumlichen Struktur und / oder der Rühreinrichtung immobilisiert, wahlweise anfänglich bedeckt von mit dem Analyt reagierenden Reagenz(ien).

Bevorzugt sieht eine Fortbildung der Erfindung vor, dass in der räumlichen Struktur eine oder mehrere Zonen aus der folgenden Gruppe von Zonen der Rührzone nachgelagert und über eine wahlweise mikrofluidisch ausgeführte Kanalstruktur mit der Rührzone verbunden sind: eine Reaktionszone, eine Detektionszone, die Fängerzone und eine Abfallzone.

Bei einer vorteilhaften Ausgestaltung der Erfindung kann vorgesehen sein, dass die Kanalstruktur die Probe der Flüssigkeit unter Nutzung von Kapillarkräften transportierend gebildet ist.

Eine Weiterbildung der Erfindung kann vorsehen, dass in der räumlichen Struktur eine oder mehrere Zonen aus der folgenden Gruppe von Zonen integriert mit der Rührzone gebildet sind: die Reaktionszone, die Detektionszone, die Fängerzone und die Abfallzone.

Eine bevorzugte Weiterbildung der Erfindung sieht vor, dass eine Wandung der räumlichen Struktur wenigstens in Wandungsteilbereichen mit zumindest einem weiteren mit dem Analyten reagierenden Reagenz beladen ist.

Bei einer zweckmäßigen Ausgestaltung der Erfindung kann vorgesehen sein, dass das mindestens eine mit dem Analyten reagierende Reagenz und wahlweise das zumindest eine weitere mit dem Analyten reagierende Reagenz eine oder mehrere Reagenzbestandteile aus der folgenden Gruppe von Reagenzbestandteilen enthalten: Lumineszenzfarbstoff, Phosphoreszenzfarbstoff, Absorptionsfarbstoff, farbige Partikel, markierte Antikörper und Antikörper mit einer bindungsfähigen Gruppe zur Bindung der Antikörper an einen zugeordneten Rezeptor. Es sind eine Vielzahl von Reagenzbestandteilen als solche bekannt. Nur beispielhaft sei auf folgende Reagenzien verwiesen: (Poly-)Streptavidin in Verbindung mit biotinylierten Antigenen oder Antikörpern, mit Metallpartikeln, insbesondere Gold, Selen oder Kohlenstoff markierte Antigene und Antikörper, mit Enzymen oder Fluoreszenzfarbstoffen markierte Antigene oder Antikörper, mit farbigen Polymerpartikeln (sogenannten Latizes) markierte Antigene oder Antikörper oder dergleichen.

Eine vorteilhafte Weiterbildung der Erfindung kann vorsehen, dass in der räumlichen Struktur ein oder mehrere durch die Probe ablösbare Reagenzien vorgesehen sind und auf der Rühreinrichtung ein Reagenz derart aufgebracht ist, dass es beim Rühren der Probe der Flüssigkeit im wesentlichen nicht lösbar von der Rühreinrichtung ist.

Zweckmäßig kann vorgesehen sein, dass das oder die ablösbaren Reagenzien analytspezifische Bindepartner sind, insbesondere Antikörper, die wahlweise markiert sind, und das mindestens eine mit dem Analyten reagierende Reagenz konfiguriert ist, den Analyten oder ein aus dem Analyten und einem oder mehreren der ablösbaren Reagenzien gebildeten Komplex zu immobilisieren.

Nachfolgend werden vorteilhafte Ausführungsformen des Verfahrens zum Bestimmen eines Analyten in einer Flüssigkeit näher erläutert.

Eine vorteilhafte Ausführungsform der Erfindung sieht vor, dass das mindestens eine mit dem Analyten reagierende Reagenz beim Rühren der Probe der Flüssigkeit zumindest teilweise von der Rühreinrichtung gelöst und gelöstes Reagenz in der Probe der Flüssigkeit zumindest teilweise aufgelöst wird.

Bevorzugt sieht eine Fortbildung der Erfindung vor, dass das mindestens eine mit dem Analyten reagierende Reagenz beim Rühren der Probe der Flüssigkeit schicht- oder oberflächenbereichsweise von der Rühreinrichtung zumindest teilweise gelöst wird.

Bei einer vorteilhaften Ausgestaltung der Erfindung kann vorgesehen sein, dass das mindestens eine mit dem Analyten reagierende Reagenz beim Rühren der Probe der Flüssigkeit zumindest teilweise ungelöst an der Rühreinrichtung verbleibt.

Eine Ausgestaltung kann vorsehen, dass das mindestens eine Reagenz mit dem Analyten in einer Reaktionszone der räumlichen Struktur reagiert. Eine bevorzugte Weiterbildung sieht vor, dass das wenigstens eine Reaktionsprodukt oder wahlweise das mittels des Reaktionsproduktes gebildete weitere Reaktionsprodukt in einer Detektionszone der räumlichen Struktur detektiert wird. Bevorzugt ist weiterhin, dass die Probe der Flüssigkeit in einer wahlweise mikrofluidisch ausgeführten Kanalstruktur der räumlichen Struktur unter Nutzung von Kapillarkräften transportiert wird. Es kann auch vorgesehen sein, die Probe mittels Pumpen oder Saugen oder mit Hilfe von Zentrifugalkräften zu bewegen.

Bei einer zweckmäßigen Ausgestaltung der Erfindung kann vorgesehen sein, dass in der räumlichen Struktur an einem immobilisierten Fängerreagenz einer Fängerzone eine oder mehrere Komplexe aus der folgenden Gruppe von Komplexen immobilisiert wird: der Analyt, das Reaktionsprodukt und das weitere Reaktionsprodukt.

Bevorzugt sieht eine Fortbildung der Erfindung vor, dass der Analyt mit zumindest einem weiteren Reagenz reagiert, mit dem eine Wandung der räumlichen Struktur wenigstens in Wandungsteilbereichen beladen ist.

Bei einer vorteilhaften Ausgestaltung der Erfindung kann vorgesehen sein, dass das mindestens eine mit dem Analyten reagierende Reagenz und wahlweise das zumindest eine weitere mit dem Analyten reagierende Reagenz eines oder mehrerer Reagenzbestandteile aus der folgenden Gruppe von Reagenzbestandteilen enthalten: Lumineszenzfarbstoff, Phosphoreszenzfarbstoff, Absorptionsfarbstoff, farbige Partikel, markierte Antikörper und Antikörper mit eine bindungsfähigen Gruppe zur Bindung der Antikörper an einen zugeordneten Rezeptor.

Eine Weiterbildung der Erfindung kann vorsehen, dass Rührbewegungen der Rühreinrichtung mittels mindestens eines Magnetfeldes angetrieben wird.

Die weiterhin vorgeschlagene, berührungslos betreibbare Rühreinrichtung kann in vorteilhaften Ausgestaltungen ausgeführt sein, wie dieses oben für die Rühreinrichtung im Zusammenhang mit der Vorrichtung zum Bestimmen eines Analyts erläutert wurde.

### Beschreibung bevorzugter Ausführungsbeispiele der Erfindung

Die Erfindung wird im folgenden anhand von bevorzugten Ausführungsbeispielen unter Bezugnahme auf Figuren einer Zeichnung näher erläutert. Hierbei zeigen:
- Fig. 1: eine schematische Darstellung eines Teststreifens zum Bestimmen eines Analyts in einer Flüssigkeit nach dem Stand der Technik;
- Fig. 2: eine schematische Darstellung einer Vorrichtung zum Bestimmen eines Analyts in einer Flüssigkeit mit einer räumlichen Struktur, in der eine Reagenzzone und eine Reaktionszone gemeinsam in einem Abschnitt sowie weiterhin eine Detektionszone gebildet sind;
- Fig. 3a: eine schematische Darstellung einer Vorrichtung zum Bestimmen eines Analyts in einer Flüssigkeit mit einer räumlichen Struktur, wobei eine Reagenzzone, eine Reaktionszone und eine Detektionszone gemeinsam in einem Abschnitt gebildet sind;
- Fig. 3b: eine schematische Darstellung einer Vorrichtung zum Bestimmen eines Analyts in einer Flüssigkeit mit einer räumlichen Struktur gemäß Fig. 3a in einer weiteren Ausführung;
- Fig. 4: eine schematische Darstellung einer Vorrichtung zum Bestimmen eines Analyts in einer Flüssigkeit mit einer räumlichen Struktur gemäß Fig. 2, wobei ein mit dem Analyt reagierendes Reagenz in einer Schicht auf einem Rührelement gebildet ist;
- Fig. 5: eine schematische Darstellung einer Vorrichtung zum Bestimmen eines Analyts in einer Flüssigkeit mit einer räumlichen Struktur gemäß Fig. 2, wobei mehrere mit dem Analyt reagierende Reagenzien ausschließlich auf dem Rührelement gebildet sind;
- Fig. 6: eine schematische Darstellung einer Vorrichtung zum Bestimmen eines Analyts in einer Flüssigkeit mit einer räumlichen Struktur gemäß Fig. 2, wobei Teilbereiche einer Oberfläche des Rührelementes mit unterschiedlichen, mit dem Analyt reagierenden Reagenzien beladen sind;
- Fig. 7: eine schematische Darstellung einer Vorrichtung zum Bestimmen eines Analyts in einer Flüssigkeit mit einer räumlichen Struktur gemäß Fig. 2, wobei mehrere Reagenzien in einer Schichtanordnung übereinander auf dem Rührelement gebildet sind;
- Fig. 8: eine schematische Darstellung einer Vorrichtung zum Bestimmen eines Analyts in einer Flüssigkeit mit einer räumlichen Struktur gemäß Fig. 3a, wobei mehrere mit dem Analyt reagierende Reagenzien in verschiedenen Teilbereichen der Oberfläche des Rührelementes gebildet sind;
- Fig. 9: eine schematische Darstellung einer Vorrichtung zum Bestimmen eines Analyts in einer Flüssigkeit mit einer räumlichen Struktur gemäß Fig. 3a, wobei ein Fängerreagenz auf dem Rührelement gebildet ist; und
- Fig. 10: eine schematische Darstellung einer Vorrichtung zum Bestimmen eines Analyts in einer Flüssigkeit mit einer räumlichen Struktur gemäß Fig. 3, wobei ein Fängerreagenz auf dem Rührelement von mehreren mit dem Analyt reagierenden Reagenzien überlagert ist.

Fig. 2 zeigt eine schematische Darstellung einer Vorrichtung zum Bestimmen eines Analyts mit einer räumlichen Struktur 10. Die räumliche Struktur 10 ist in einem Abschnitt 12 mit einer Reagenzzone 13 und einer Reaktionszone 14 sowie in einem dem Abschnitt 12 nachgeschalteten, weiteren Abschnitt 15 mit einer Detektionszone 16 gebildet. In der räumlichen Struktur 10 sind der Abschnitt 12 und der weitere Abschnitt 15 über einen Kanal 17 verbunden, sodass eine Flüssigkeit aus dem Abschnitt 12 in den weiteren Abschnitt 15 gelangen kann.

Die räumliche Struktur 10 ist mittels Wahl der räumlichen Dimensionen in verschiedenen Ausgestaltungen wahlweise als mikrofluidische Struktur oder nicht mikrofluidische Struktur (makroskopische Struktur) ausgeführt. Beispielsweise kann die räumliche Struktur 10 mit Hilfe von Mikrotiterplatten hergestellt werden. Auch die Ausführung der räumlichen Struktur 10 in einem Spritzgießbauteil kann vorgesehen sein. Darüber hinaus besteht eine Herstellungsmöglichkeit für die räumliche Struktur 10 darin, eine Laserbearbeitung eines geeigneten Materials, beispielsweise eines Kunststoffes, eines Halbleitermaterials oder eines Metalls, zu nutzen.

Eine weitere Möglichkeit, die räumliche Struktur 10 herzustellen besteht darin, einen Verbund von schichtförmigen Materialien zu benutzen. Beispielsweise kann ein mit Aussparungen versehenes, doppelseitiges Klebeband auf eine ebene Kunststofffolie aufgebracht werden und nach Einbringen der entsprechenden Reagenzien mit einer weiteren ebenen Kunststofffolie verschlossen werden. Das doppelseitige Klebeband dient hierbei als Abstandshalter (Spacer) für die beiden ebenen Folien und definiert gleichzeitig über die Aussparungen Öffnungs-, Kammer- und Kanalstrukturen.

Die Dimensionen der räumlichen Struktur 10 können hierbei so gestaltet werden, dass eine Flüssigkeit in der räumlichen Struktur 10 zumindest in Teilabschnitten mittels Kapillarkräften transportiert wird. Mittels Wahl der Dimensionen und der Formgestaltung der räumlichen Struktur 10 können die Strömungsverhältnisse in der räumlichen Struktur 10 dem Anwendungsfall entsprechend angepasst werden, beispielsweise um unterschiedliche Viskositäten von Flüssigkeiten zu berücksichtigen, die den zu bestimmenden Analyt enthalten.

Zum Bestimmen des Analyts wird in die räumliche Struktur 10 eine Probe der Flüssigkeit mit dem Analyt, beispielsweise eine Körperflüssigkeit wie Urin oder Blut, eingebracht. Die Probe der Flüssigkeit gelangt dann zunächst in den Abschnitt 12, in welchem die Reagenzzone 13, nämlich ein Abschnitt der räumlichen Struktur 10, in welchem ein oder mehrere mit dem Analyt reagierende Reagenzien vorliegen, und die Reaktionszone 14 gebildet sind. In dem Abschnitt 12 ist eine magnetische Rühreinrichtung in Form eines Rührelementes 18 angeordnet. Das Rührelement 18 kann unter Verwendung eines äußeren Magnetfeldes 19 in Drehbewegungen versetzt werden, so dass in dem Abschnitt 12 eine Rührzone 11 gebildet wird, in welcher die Probe der Flüssigkeit gerührt wird.

Das Rührelement 18 ist mit einem Reagenz beladen, welches sich beim Drehen des Rührelementes 18 in der Probe der Flüssigkeit nach und nach von dem Rührelement 18 löst und mit der Probe der Flüssigkeit vermischt wird. Weitere Reagenzien sind an einer Wandung 12a in dem Abschnitt 12 gebildet. Die Reagenzien reagieren dann in der Reaktionszone 14, die sich mit der Reagenzzone 13 und der Rührzone 11 zumindest abschnittsweise überlappt, mit dem Analyt in der Flüssigkeit, wodurch ein Reaktionsprodukt gebildet wird. Der Rührvorgang mit Hilfe des Rührelementes 18 unterstützt sowohl das Lösen der Reagenzien von dem Rührelement 18 und der Wandung 12a als auch deren Vermischung mit der Probe der Flüssigkeit. Beide Vorgänge werden mittels Drehen des Rührelementes 18 beschleunigt.

Nachdem die Reaktion der gelösten Reagenzien mit dem Analyt der Flüssigkeit in der in dem Abschnitt 12 gebildeten Reaktionszone 14 stattgefunden hat, wird die Probe der Flüssigkeit durch den Kanal 17 in die Detektionszone 16 in dem weiteren Abschnitt 15 der räumlichen Struktur 10 gebracht. Dieses erfolgt wahlweise unter Ausnutzung von Kapillarkräften. Es kann auch vorgesehen sein, die Probe der Flüssigkeit aus dem Abschnitt 12 über den Kanal 17 in den weiteren Abschnitt 15 zu pumpen, beispielsweise mit Hilfe einer Mikropumpe (nicht dargestellt). Auch ein Überleiten der Probe der Flüssigkeit aus dem Abschnitt 12 in den weiteren Abschnitt 15 mittels Gravitationskräften oder Fliehkräften kann vorgesehen sein. Selbstverständlich können die verschiedenen Arten zum Überleiten der Probe der Flüssigkeit aus der Reaktionszone 14 in die Detektionszone 16 auch miteinander kombiniert werden.

In der Detektionszone 16 wird das Reaktionsprodukt dann mittels eines Nachweisverfahrens detektiert, bei dem es sich beispielsweise um ein optisches oder ein anderes physikalisches Verfahren, ein elektrochemisches oder ein anderes chemisches Verfahren handelt.

Gemäß der schematischen Darstellung in Fig. 2 ist im Bereich einer Wandung 20 der Detektionszone 16 ein weiteres Reagenz 21 immobilisiert. Das weitere Reagenz 21 dient als Fängerreagenz, indem an das weitere Reagenz, bei dem es sich in einer Ausführungsform zum Beispiel um Streptavidin handelt, das Reaktionsprodukt bindet, welches bei der Reaktion des Analyts in der Probe der Flüssigkeit mit dem Reagenz auf dem Rührelement 18 in der Reaktionszone14 gebildet wurde. Mit Hilfe des weiteren Reagenz 21 ist als weitere funktionelle Zone in der räumlichen Struktur 10 eine Fängerzone 22 gebildet. Nach der Bindung an das als Fängerreagenz wirkende, weitere Reagenz 21 kann die Bestimmung des Analyts in der Detektionszone 16 ausgeführt werden. Ein Vorteil, welcher mit der Bindung des Reaktionsproduktes in der Fängerzone 22 verbunden ist, liegt darin, dass das Reaktionsprodukt mit weiteren Aliquoten der Probe der Flüssigkeit oder mit einer anderen Flüssigkeit gewaschen werden kann. Ein weiterer Vorteil besteht darin, dass im Bereich der quasi planaren Fängerzone 22 einfache optische Verhältnisse für eine optische Untersuchung vorliegen.

Bei dem Verfahren zum Bestimmen des Analyts kann vorgesehen sein, den Schritt zum Bestimmen des Analyts auszuführen, nachdem störende Substanzen aus der räumlichen Struktur 10 mittels Waschen entfernt wurden. Zum Waschen kann beispielsweise ein Überschuss an Probe oder aber eine separat zugeführte Waschflüssigkeit, beispielsweise ein Waschpuffer, verwendet werden.

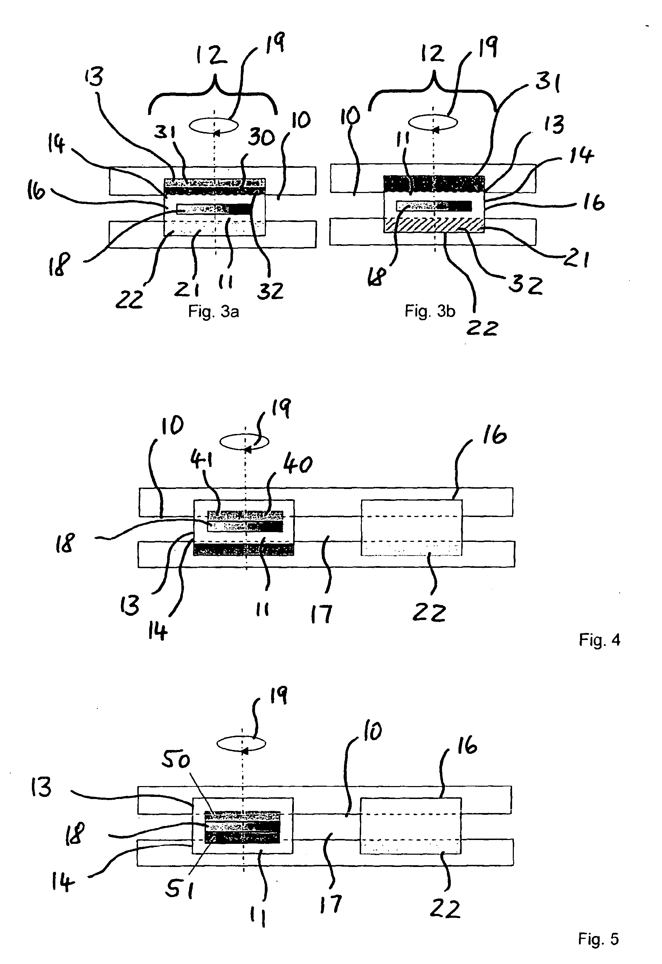

Fig. 3a zeigt eine schematische Darstellung einer Vorrichtung zum Bestimmen eines Analyts in einer Flüssigkeit mit einer räumlichen Struktur, wobei im Unterschied zu der Ausführung nach Fig. 2 eine Reagenzzone, eine Reaktionszone und eine Detektionszone gemeinsam in einem Abschnitt der räumlichen Struktur gebildet sind. Für gleiche Merkmale werden in Fig. 3a die gleichen Bezugszeichen wie in Fig. 2 verwendet.

Im Unterschied zu der Vorrichtung nach Fig. 2 ist die in Fig. 3a schematisch dargestellte Vorrichtung zum Bestimmen des Analyts so gebildet, dass in dem Abschnitt 12 sowohl die Reagenzzone13 als auch die Reaktionszone 14 und die Detektionszone 16 gebildet sind. Das Rührelement 18 ist wiederum mit mindestens einem mit dem Analyt in der Probe der Flüssigkeit reagierenden Reagenz beladen. Im Bereich des Abschnitts 12 der räumlichen Struktur 10 ist auf der Wandung eine Schichtanordnung 30 mit einem ersten und einem zweiten mit dem Analyt in der Flüssigkeit reagierenden Reagenz 31, 32 gebildet. Das erste und das zweite Reagenz 31, 32 aus der Schichtanordnung 30 werden durch das Rühren mit dem Rührelement 18 von der Wandung gelöst, mit der Probe der Flüssigkeit vermischt und in der Probe der Flüssigkeit aufgelöst. In einer Ausgestaltung reagieren das erste Reagenz 31 und das zweite Reagenz 32 zu einem Reaktionsprodukt, beispielsweise einer sandwichartigen Verbindung, die dann an ein weiteres, als Fängerreagenz wirkendes Reagenz 21 in der Fängerzone 22 gebunden wird. Zum Entfernen von nicht gebundenen Reagenzien kann der Abschnitt 12 der räumlichen Struktur 10 vor dem eigentlichen Bestimmen des Analyts mit einer anderen Flüssigkeit oder einem Aliquot der Probe gespült werden.

Fig. 3b zeigt eine schematische Darstellung einer Vorrichtung zum Bestimmen eines Analyts in einer Flüssigkeit mit einer räumlichen Struktur nach Fig. 3a in einer weiteren Ausführung. Das zweite Reagenz 32, welches bei der Ausführung nach Fig. 3a Bestandteil der Schichtanordnung 30 ist, wird nun zusammen mit dem Fängerreagenz 21 in der Fängerzone 22 immobilisiert, sodass beim Bestimmen des Analyts ein Komplex aus Analyt und dem ersten Reagenz 31 in der Fängerzone 22 anlagert. Vorzugsweise sind das zweite Reagenz 32 und das Fängerreagenz 21 in räumlich separierten Zonen in der Fängerzone untergebracht, beispielsweise einem Strich- oder Punktmuster entsprechend.

Fig. 4 zeigt eine schematische Darstellung einer Vorrichtung zum Bestimmen eines Analyts in einer Flüssigkeit mit einer räumlichen Struktur gemäß der Fig. 2. Für gleiche Merkmale werden in Fig. 4 die gleichen Bezugszeichen wie in den vorangehenden Fig. 2, 3a und 3b verwendet. Das Rührelement 18 ist mit einem Reagenz 40 in Form eines Trockenreagenz beladen, welches als eine Schicht 41 aufgebracht ist.

Fig. 5 zeigt eine schematische Darstellung einer Vorrichtung zum Bestimmen eines Analyts in einer Flüssigkeit mit einer räumlichen Struktur gemäß Fig. 2. Für gleiche Merkmale werden die gleichen Bezugszeichen wie in den vorangehenden Fig. 2 bis 4 verwendet. Mehrere mit dem Analyt reagierende Reagenzien 50, 51 sind ausschließlich auf dem Rührelement 18 gebildet sind. Die mehreren Reagenzien 50, 51 sind auf einer Oberseite und einer Unterseite des Rührelementes 18 angeordnet.

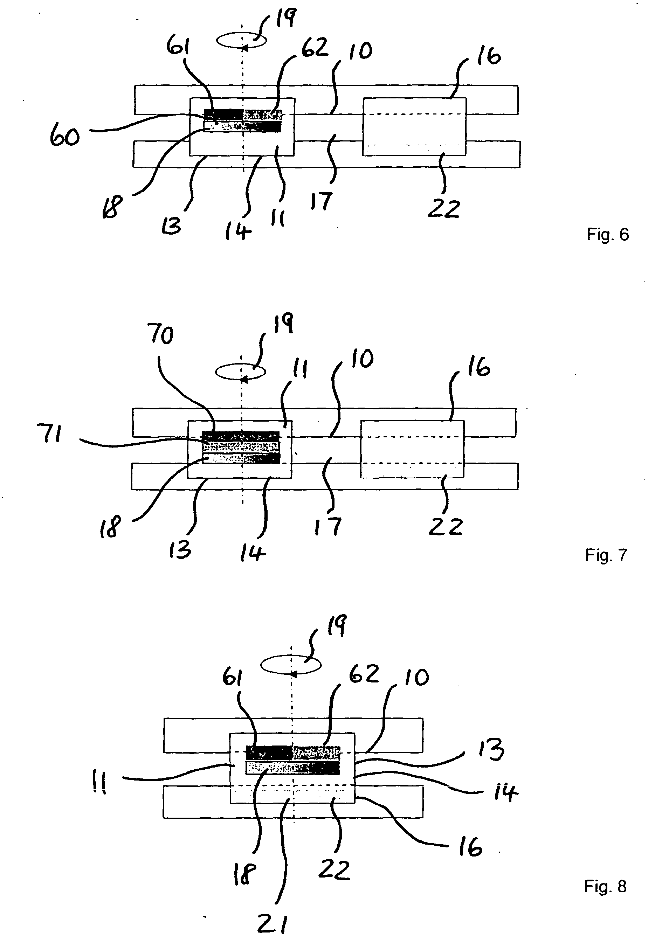

Fig. 6 zeigt eine schematische Darstellung einer Vorrichtung zum Bestimmen eines Analyts in einer Flüssigkeit mit einer räumlichen Struktur gemäß Fig. 2. Für gleiche Merkmale werden die gleichen Bezugszeichen wie in den vorangehenden Fig. 2 bis 5 verwendet. Das Rührelement ist in Teilbereichen einer Oberfläche 60 des Rührelements 18 mit unterschiedlichen Reagenzien 61, 62 beladen. Hierfür sind alle Außenflächen des Rührelementes 18 nutzbar.

Fig. 7 zeigt eine schematische Darstellung einer Vorrichtung zum Bestimmen eines Analyts in einer Flüssigkeit mit einer räumlichen Struktur gemäß Fig. 2. Für gleiche Merkmale werden die gleichen Bezugszeichen wie in den vorangehenden Fig. 2 bis 6 verwendet. Mehrere Reagenzien 70 sind in einer Schichtanordnung 71 übereinander auf dem Rührelement 18 gebildet.

Fig. 8 zeigt eine schematische Darstellung einer Vorrichtung zum Bestimmen eines Analyts in einer Flüssigkeit mit einer räumlichen Struktur gemäß Fig. 3a. Für gleiche Merkmale werden die gleichen Bezugszeichen wie in den vorangehenden Fig. 2 bis 7 verwendet.

Mehrere mit dem Analyt reagierende Reagenzien 61, 62 sind in verschiedenen Teiloberflächen des Rührelementes 18 gebildet. Vorzugsweise sind die mit dem Analyt reagierenden Reagenzien 61, 62 in Gegenwart der Probenflüssigkeit vom Rührelement 18 ablösbar. Alternativ ist es möglich, die Reagenzien 61, 62 anstelle des Fängerreagenzes 21 an einer oder mehreren Wandungen der Vorrichtung in durch die Probenflüssigkeit ablösbarer Form bereitzustellen und auf dem Rührelement 18 das Fängerreagenz 21 zu immobilisieren. Beispielsweise können das Reagenz 61 ein biotinylierter Anti-Analyt-Antikörper und das Reagenz 62 ein mit einem optisch oder visuell detektierbaren Label konjugierten Anti-Analyt-Antikörper sein. Das Fängerreagenz 21 kann (Poly-)Streptavidin sein. In Gegenwart des Analyten in der flüssigen Probe wird mittels Auflösen der Reagenzien 61, 62 die Nachweisreaktion für den Analyten gestartet. In der Probenflüssigkeit bilden sich sogenannte Sandwich-Komplexe aus biotinyliertem Anti-Analyt-Antikörper, Analyt und gelabeltem Anti-Analyt-Antikörperkonjugat. Mittels Bewegen des Rührelements 18, was in den Fig. 2 bis 10 mittels der schematisch gezeigten Drehbewegung 19 symbolisiert ist, werden das Auflösen der Reagenzien 61, 62 und das Durchmischen der Probe erleichtert. Ebenfalls erleichtert wird das Abfangen der Sandwich-Komplexe aus Analyt und dazugehöriger Bindepartnern durch die Fängerzone 22, die sich in diesem Fall auf dem Rührelement 18 befindet. Vorzugsweise wird zur Detektion das Rührelement 18 angehalten, und besonders bevorzugt beispielsweise mittels Magnetfeldern an einer Seite der Vorrichtung mit der räumlichen Struktur 10 gehalten, so dass insbesondere bei optischen Detektionsmethoden reproduzierbare optische Verhältnisse erzielt werden.

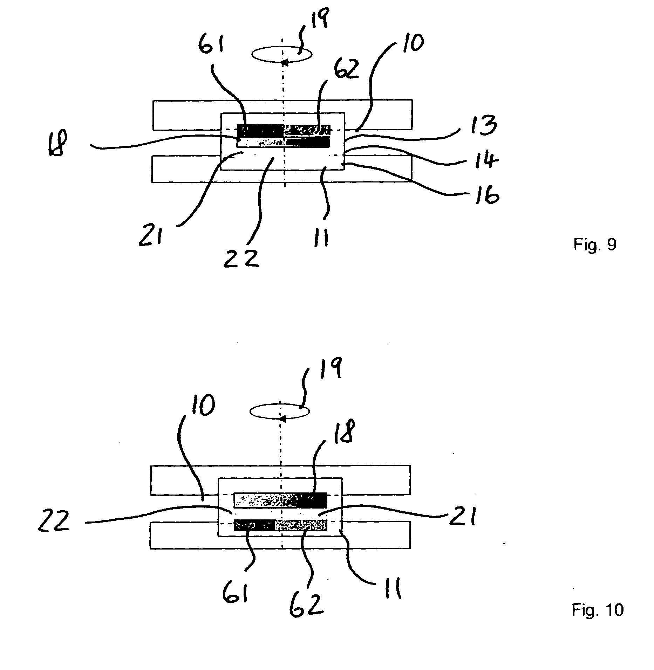

Fig. 9 zeigt eine schematische Darstellung einer Vorrichtung zum Bestimmen eines Analyts in einer Flüssigkeit mit einer räumlichen Struktur gemäß Fig. 3a. Für gleiche Merkmale werden die gleichen Bezugszeichen wie in den vorangehenden Fig. 2 bis 8 verwendet. Ein Fängerreagenz 21 ist auf dem Rührelement 18 gebildet. Auf der anderen Seite ist das Rührelement 18 in Teilflächen mit weiteren Reagenzien 61, 62 beladen, welche an dem Rührelement 18 aufgebracht sind.

Fig. 10 zeigt eine schematische Darstellung einer Vorrichtung zum Bestimmen eines Analyts in einer Flüssigkeit mit einer räumlichen Struktur gemäß Fig. 3a. Für gleiche Merkmale werden die gleichen Bezugszeichen wie in den vorangehenden Fig. 2 bis 9 verwendet. Im Unterschied zu der Ausgestaltung in Fig. 9 ist das Fängerreagenz 21 auf dem Rührelement 18 in Teilflächen mit den weiteren Reagenzien 61, 62 überlagert. Beim Rühren der Probe der Flüssigkeit mit dem Rührelement 18 lösen sich nun zunächst die weiteren Reagenzien 60, 61 und reagieren mit dem Analyt. Danach lagert das so gebildete Reaktionsprodukt in der Fängerzone 22 an dem Fängerreagenz 21 an, welches seinerseits durch das Rühren in der Flüssigkeit nicht lösbar auf dem Rührelement 18 gebildet ist.

In den vorangehenden Ausführungsbeispielen wurde die räumliche Struktur 10 mit dem Abschnitt 12 und wahlweise mit dem weiteren Abschnitt 15 beschrieben. Es können in anderen Ausgestaltungen zusätzliche Abschnitte vorgesehen sein, um die verschiedenen Zonen einzeln pro Abschnitt der räumlichen Struktur 10 oder in beliebigen Kombinationen zu bilden. Auch können die beschriebenen Möglichkeiten des Anordnens und des Immobilisierens der Reagenzien in den verschiedenen Bereichen der räumlichen Struktur 10 und auf dem Rührelement 18 beliebig miteinander kombiniert werden. Die Rührzone 11 ist dann in dem Bereich der räumlichen Struktur 10 gebildet, in welcher das Rührelement 18 angeordnet ist. Unter Einbeziehung der Bereiche der räumlichen Struktur 10, in welchen Reagenzien abgelagert sind, die mit dem zu bestimmenden Analyt vor einer Anlagerung in der wahlweise vorgesehenen Fängerzone reagieren, ist allgemein eine Zone gebildet, die auch als Reagenzzone bezeichnet wird. Diese Zone kann sich räumlich mit anderen Zonen in der räumlichen Struktur 10 überlappen, beispielsweise der Reaktionszone und der Detektionszone. Zusätzlich kann ein Abschnitt vorgesehen sein, in welchem eine Abfallzone gebildet ist. Die Abfallzone wird in der Kette der Zone in der Regel am Ende vorgesehen sein.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Vorrichtung zum Bestimmen eines Analyts in einer Flüssigkeit, mit:
- einer räumlichen Struktur (10), in der eine Rührzone (11) gebildet ist,
- einer in der Rührzone (11) eingebrachten Probe der Flüssigkeit und
- einer in der Rührzone (11) angeordneten und berührungslos betreibbaren Rühreinrichtung (18), welche eine magnetische Rühreinrichtung ist und konfiguriert ist, die in die Rührzone (11) eingebrachte Probe der Flüssigkeit zu rühren, und welche mit mindestens einem mit dem Analyten reagierenden Reagenz beladen ist,
**dadurch gekennzeichnet, dass** die magnetische Rühreinrichtung ein oder mehrere Rührerelemente bildende Magnetstreilenabschnitte umfasst und dass das mindestens eine Reagenz beim Rühren der Probe der Flüssigkeit wenigstens teilweise von der Rühreinrichtung lösbar ist.

2. Vorrichtung nach Anspruch 1, **dadurch gekennzeichnet, dass** die Rühreinrichtung (18) Porenstrukturen mit Poren aufweist, in welche des mindestens eine mit dem Analyten reagierende Reagenz zumindest teilweise eingelagert ist.

3. Vorrichtung nach Anspruch 1 oder 2, **dadurch gekennzeichnet, dass** die räumliche Struktur (10) eine mikrofluidischen Struktur ist.

4. Vorrichtung nach Anspruch 3, **dadurch gekennzeichnet, dass** die Rühreinrichtung (18) ein Mikrorührer ist.

5. Vorrichtung nach einem der vorangehenden Ansprüche, **dadurch gekennzeichnet, dass** die Rühreinrichtung (18) eine Folie mit Magnetschicht umfasst.

6. Vorrichtung nach einem der vorangehenden Ansprüche, **dadurch gekennzeichnet, dass** die Rühreinrichtung (18) mindestens ein Rührcrtcilclcment aus der folgenden Gruppe von Rührerteilelementen aufweist:
einen laminierten Abschnitt, einen Gewebeabschnitt, einen Vliesabschnitt, einen Membranabschnitt und einen Folienabschnitt.

7. Vorrichtung nach einem der vorangehenden Ansprüche, **dadurch gekennzeichnet, dass** die Rühreinrichtung (18) zumindest in Teilbereichen eine Beschichtung aufweist.

8. Vorrichtung nach einem der vorangehenden Ansprüche, **dadurch gekennzeichnet, dass** das mindestens eine mit dem Analyten reagierende Reagenz als mindestens ein Trockenreagenz an der Rühreinrichtung (18) gebildet ist.

9. Vorrichtung nach einem der vorangehenden Ansprüche, **dadurch gekennzeichnet, dass** das mindestens eine mit dem Analyten reagierende Reagenz in einer Schichtanordnung (41; 50, 51; 70) an der Rühreinrichtung (18) gebildet ist, die eine Oberfläche der Rühreinrichtung (18) zumindest teilweise bedeckt.

10. Vorrichtung nach Anspruch 9, **dadurch gekennzeichnet, dass** die Schichtanordnung (70) sich überlagernde Schichten verschiedener, mit dem Analyten reagierender Reagenzien aufweist.

11. Vorrichtung nach Anspruch 9 oder 10, **dadurch gekennzeichnet, dass** die verschiedenen, mit dem Analyten reagierenden Reagenzien in den Schichten oder in der Schichtanordnung (50; 51; 70) unterschiedliche Löslichkeiten beim Rühren der Probe der Flüssigkeit mit der Rühreinrichtung (18) aufweisen.

12. Vorrichtung nach einem der vorangehenden Ansprüche, **dadurch gekennzeichnet, dass** in der räumlichen Struktur (10) weiterhin eine Fängerzone gebildet ist, in welcher ein Fängerreagenz immobilisiert ist.

13. Vorrichtung nach einem der vorangehenden Ansprüche, **dadurch gekennzeichnet, dass** in der räumlichen Struktur (10) eine oder mehrere Zonen aus der folgenden Gruppe von Zonen der Rührzone (11) nachgelagert und über eine Kanalstruktur mit der Rührzone (11) verbunden sind: eine Reaktionszone (14), eine Detektionszone (16), eine Fängerzone (22) und eine Abfallzonc.

14. Vorrichtung nach einem der vorangehenden Ansprüche, **dadurch gekennzeichnet, dass** in der räumlichen Struktur (10) eine oder mehrere Zonen aus der folgenden Gruppe von Zonen integriert mit der Rührzone (11) gebildet sind: die Reaktionszone (14), die Detektionszone (16), die Fängerzone (22) und die Abfallzone.

15. Vorrichtung nach einem der vorangehenden Ansprüche, **dadurch gekennzeichnet, dass** eine Wandung (12a) der räumlichen Struktur (10) wenigstens in Wandungsteilbereichen mit zumindest einem weiteren mit dem Analyten reagierenden Reagenz beladen ist.

16. Vorrichtung nach einem der vorangehenden Ansprüche, **dadurch gekennzeichnet, dass** das mindestens eine mit dem Analyten reagierende Reagenz eine oder mehrere Reagenzbestandteile aus der folgenden Gruppe von Reagenzbestandteilen enthält: Lumineszenzfarbstoff, Phosphoreszenzfarbstoff, Absorptionsfarbstoff, farbige Partikel, markierte Antikörper und Antikörper mit einer bindungsfähigen Gruppe zur Bindung der Antikörper an einen zugeordneten Rezeptor.

17. Vorrichtung nach einem der vorangehenden Ansprüche, **dadurch gekennzeichnet, dass** in der räumlichen Struktur (10) ein oder mehrere durch die Probe ablösbare Reagenzien vorgesehen sind und auf der Rühreinrichtung (18) ein Reagenz derart aufgebracht ist, dass es beim Rühren der Probe der Flüssigkeit im wesentlichen nicht lösbar von der Rühreinrichtung (18) ist.

18. Vorrichtung nach Anspruch 17, **dadurch gekennzeichnet, dass** das oder die ablösbaren Reagenzien analytspezifische Bindepartner sind und das mindestens eine mit dem Analyten reagierende Reagenz konfiguriert ist, den Analyten oder ein aus dem Analyten und einem oder mehreren der ablösbaren Reagenzien gebildeten Komplex zu immobilisieren.

19. Verfahren zum Bestimmen eines Analyts in einer Flüssigkeit, bei dem:
- eine Probe der Flüssigkeit in eine räumliche Struktur (10) mit einer Rührzone (11) eingebracht wird,
- die eingebrachte Probe der Flüssigkeit mit einer in der Rührzone (11) angeordneten, berührungslos betreibbaren magnetischen Rühreinrichtung (18), welche mit mindestens einem mit dem Analyten reagierenden Reagenz beladen ist, gerührt wird,
- zum Rühren der magnetischen Rühreinrichtung ein oder mehrere Rührelemente bildende Magnetstreifenabschnitte verwendet werden,
- das mindestens eine Reagenz beim Rühren wenigstens teilweise von der Rühreinrichtung gelöst wird,
- gelöstes Reagenz in der Probe der Flüssigkeit zumindest teilweise aufgelöst wird,
- das mindestens eine Reagenz mit dem Analyt in der Probe der Flüssigkeit unter Bildung eines Reaktionsproduktes reagiert und
- das Analyt bestimmt wird, indem das wenigstens eine Reaktionsprodukt oder wahlweise ein mittels des Reaktionsproduktes gebildetes weiteres Reakrtionsprodukt detektiert wird.

20. Verfahren nach Anspruch 19, **dadurch gekennzeichnet, dass** das mindestens eine mit dem Analyten reagierende Reagenz beim Rühren der Probe der Flüssigkeit schicht- oder oberflächenbereichsweise von der Rühreinrichtung (18) zumindest teilweise gelöst wird.

21. Verfahren nach Anspruch 19 oder 20, **dadurch gekennzeichnet, dass** das mindestens eine mit dem Analyten reagierende Reagenz beim Rühren der Probe der Flüssigkeit zumindest teilweise ungelöst an der Rühreinrichtung (18) verbleibt.

22. Verfahren nach einem der Ansprüche 19 bis 21, **dadurch gekennzeichnet, dass** in der räumlichen Struktur (10) an einem immobilisierten Reagenz (21) einer Fängerzone (22) eine oder mehrere Komplexe aus der folgenden Gruppe von Komplexen immobilisiert wird: der Analyt, das Reaktionsprodukt und das weitere Reaktionsprodukt,

23. Verfahren nach einem der Ansprüche 19 bis 22, **dadurch gekennzeichnet, dass** der Analyt mit zumindest einem weiteren Reagenz reagiert, mit dem eine Wandung (12a) der räumlichen Struktur (10) wenigstens in Wand ungsteilbereichen beladen ist.

24. Verfahren nach einem der Ansprüche 19 bis 23, **dadurch gekennzeichnet, dass** das mindestens eine mit dem Analyten reagierende Reagenz eines oder mehrerer Reagenzbestandteile aus der folgenden Gruppe von Reagenzbestandteilen enthält: Lumineszenzfarbstoff, Phosplioreszenzfarbstoff, Absorptionsfarbstoff, farbige Partikel, markierte Antikörper und Antikörper mit eine bindungsfähigen Gruppe zur Bindung der Antikörper an einen zugeordneten Rezeptor.

25. Verfahren nach einem der Ansprüche 19 bis 24, **dadurch gekennzeichnet, dass** Rührbewegungen der Rühreinrichtung (18) mittels mindestens eines Magnetfeldes angetrieben wird.

## Claims

1. Device for determining an analyte in a liquid, comprising:
- a three-dimensional structure (10), in which a stirring zone (11) is formed,
- a sample of the liquid introduced into the stirring zone (11), and
- a stirring device (18) which is arranged in the stirring zone (11) and which can be operated in a contactless manner wherein the stirring device is a magnetic stirring device and being configured to stir the sample of liquid introduced into the stirring zone (11) and being loaded with at least one reagent which reacts with the analyte,
**characterised in that** the magnetic stirring device comprises one or more magnetic strip sections and the at least one reagent is partially detachable from the stirring device during stirring the sample of liquid.

2. Device according to claim 1, **characterised in that** the stirring device (18) has pore structures with pores in which the at least one reagent which reacts with the analyte is at least partially embedded.

3. Device according to claim 1 or 2, **characterised in that** the a three-dimensional structure (10) is a microfuidic structure.

4. Device according to claim 3, **characterised in that** the stirring device (18) is a micro stirrer.

5. Device according to one of the preceding claims, **characterised in that** the stirring device (18) comprises a film with a magnetic layer.

6. Device according to one of the preceding claims, **characterised in that** the stirring device (18) has at least one stirring sub-element selected from the following group of stirring sub-elements: a laminated section, a woven section, a nonwoven section, a membrane section and a film section.

7. Device according to one of the preceding claims, **characterised in that** the stirring device (18) has at least in sub-regions a coating.

8. Device according to one of the preceding claims, **characterised in that** the at least one reagent which reacts with the analyte is formed as at least one dry reagent at the stirring device (18).

9. Device according to one of the preceding claims, **characterised in that** the at least one reagent which reacts with the analyte is formed in a layer arrangement (41; 50, 51; 70) on the stirring device (18), which layer arrangement at least partially covers one surface of the stirring device (18).

10. Device according to claim 9, **characterised in that** the layer arrangement (70) comprises superposed layers of different reagents which react with the analyte.

11. Device according to claim 9 or 10, **characterised in that** the different reagents in the layers or in the layer arrangement (50; 51; 70) which react with the analyte have different solubilities during stirring of the sample of liquid with the stirring device (18).

12. Device according to one of the preceding claims, **characterised in that** a trapping zone is also formed in the three-dimensional structure (10), a trapping reagent being immobilised in said trapping zone.

13. Device according to one of the preceding claims, **characterised in that** one or more zones selected from the following group of zones are arranged downstream of the stirring zone (11) in the three-dimensional structure (10) and are connected to the stirring zone (11) via an optionally microfluidic channel structure: a reaction zone (14), a detection zone (16), a trapping zone (22) and a waste zone.

14. Device according to one of the preceding claims, **characterised in that** one or more zones selected from the following group of zones are formed in the three-dimensional structure (10) and are integrated with the stirring zone (11): the reaction zone (14), the detection zone (16), the trapping zone (22) and the waste zone.

15. Device according to one of the preceding claims, **characterised in that** a wall (12a) of the three-dimensional structure (10) is loaded at least in wall sub-regions with at least one further reagent which reacts with the analyte.

16. Device according to one of the preceding claims, **characterised in that** the at least one reagent which reacts with the analyte contains one or more reagent constituents selected from the following group of reagent constituents: luminescent dye, phosphorescent dye, absorption dye, coloured particles, labelled antibodies, and antibodies with a binding group for binding the antibodies to an associated receptor.

17. Device according to one of the preceding claims, **characterised in that** one or more reagents which can be detached by the sample are provided in the three-dimensional structure (10), and one reagent is applied to the stirring device (18) in such a way that it is substantially non-detachable from the stirring device (18) during stirring of the sample of liquid.

18. Device according to claim 17, **characterised in that** the detachable reagent(s) are analyte-specific binding partners and the at least one reagent which reacts with the analyte is configured so as to immobilise the analyte or a complex formed of the analyte and one or more of the detachable reagents.

19. Method for determining an analyte in a liquid, in which:
- a sample of the liquid is introduced into a three-dimensional structure (10) with a stirring zone (11),
- the introduced sample of liquid is stirred by a magnetic stirring device (18) which is arranged in the stirring zone (11) and can be operated in a contactless manner, and said magnetic stirring device being loaded with at least one reagent which reacts with the analyte,
- for stirring the magnetic stirring device one or more magnetic strip sections are used,
- the at least one reagent is partially detachable from the stirring device during stirring of the sample of liquid,
- the detached reagent is at least partially dissolved in the sample of liquid, and
- the analyte is determined by detecting the at least one reaction product or optionally a further reaction product formed by means of the reaction product.

20. Method according to claim 19, **characterised in that** the at least one reagent which reacts with the analyte is at least partially detached in some layers or surface regions from the stirring device (18) during stirring of the sample of liquid.

21. Method according to one of claims 19 or 20 **characterised in that** the at least one reagent which reacts with the analyte remains at least partially non-detached on the stirring device (18) during stirring of the sample of liquid.

22. Method according to one of claims 19 to 21, **characterised in that** one or more complexes selected from the following group of complexes are immobilised in the three-dimensional structure (10) on an immobilised reagent (21) in a trapping zone (22): the analyte, the reaction product and the further reaction product.

23. Method according to one of claims 19 to 22, **characterised in that** the analyte which reacts at least with one further reagent, with which a wall (12a) of the three-dimensional structure (10) is loaded at least in wall sub-regions.

24. Method according to one of claims 19 to 23, **characterised in that** the at least one reagent which reacts with the analyte and optionally the at least one further reagent which reacts with the analyte contain one or more reagent constituents selected from the following group of reagent constituents: luminescent dye, phosphorescent dye, absorption dye, coloured particles, labelled antibodies, and antibodies with a binding group for binding the antibodies to an associated receptor.

25. Method according to one of claims 19 to 24, **characterised in that** stirring movements of the stirring device (18) are driven by means of at least one magnetic field.

## Revendications

1. Dispositif pour cibler un analyte dans un liquide comprenant :
- une structure spatiale (10) dans laquelle une zone d'agitation (11) est formée,
- un échantillon du liquide placé dans la zone d'agitation (11) et
- un dispositif d'agitation (18) placé dans la zone d'agitation (11) et pouvant être actionné sans contact, lequel est un dispositif d'agitation magnétique et est configuré pour agiter l'échantillon de liquide placé dans la zone d'agitation (11) et lequel est chargé au moins avec un réactif réagissant avec l'analyte,
**caractérisé en ce que** le dispositif d'agitation magnétique comprend une ou plusieurs section(s) de bande magnétique formant des éléments d'agitation et **en ce que** l'au moins un réactif peut être au moins partiellement dissout par le dispositif d'agitation au cours de l'agitation de l'échantillon de liquide.

2. Dispositif selon la revendication 1, **caractérisé en ce que** le dispositif d'agitation (18) présente des structure poreuses avec des pores dans lesquelles l'au moins un réactif réagissant avec l'analyte est stocké au moins partiellement.

3. Dispositif selon la revendication 1 ou 2, **caractérisé en ce que** la structure spatiale (10) est une structure microfluidique.

4. Dispositif selon la revendication 3, **caractérisé en ce que** le dispositif d'agitation (18) est un microagitateur.

5. Dispositif selon l'une des revendications précédentes, **caractérisé en ce que** le dispositif d'agitation (18) comprend un film avec une couche magnétique.

6. Dispositif selon l'une des revendications précédentes, **caractérisé en ce que** le dispositif d'agitation (18) présente au moins un élément de partie d'agitateur du groupe suivant des éléments de partie d'agitateur :
une section laminée, une section tissée, une section non-tissée, une section de membrane et une section de film.

7. Dispositif selon l'une des revendications précédentes, **caractérisé en ce que** le dispositif d'agitation (18) présente un revêtement au moins dans des zones partielles.

8. Dispositif selon l'une des revendications précédentes, **caractérisé en ce que** l'au moins un réactif réagissant avec l'analyte est formé en tant qu'au moins un réactif sec sur le dispositif d'agitation (18).

9. Dispositif selon l'une des revendications précédentes, **caractérisé en ce que** l'au moins un réactif réagissant avec l'analyte est formé en un agencement de couches (41 ; 50, 51 ; 70) sur le dispositif d'agitation (18) qui recouvre au moins partiellement une surface du dispositif d'agitation (18).

10. Dispositif selon la revendication 9, **caractérisé en ce que** l'agencement de couches (70) présente des couches qui se superposent de différents réactifs réagissant avec l'analyte.

11. Dispositif selon la revendication 9 ou 10, **caractérisé en ce que** les différents réactifs réagissant avec l'analyte dans les couches ou dans l'agencement de couches (50 ; 51 ; 70) présentent des solubilités différentes au cours de l'agitation de l'échantillon de liquide avec le dispositif d'agitation (18).

12. Dispositif selon l'une des revendications précédentes, **caractérisé en ce qu'**une zone de collecte dans laquelle un réactif de collecte est immobilisé, est formée en outre dans la structure spatiale (10).

13. Dispositif selon l'une des revendications précédentes, **caractérisé en ce qu'**une ou plusieurs zone(s) du groupe suivant de zones de la zone d'agitation (11) est/sont stockée(s) dans la structure spatiale (10) et est/sont reliée(s) à la zone d'agitation (11) par une structure de canal : une zone de réaction (14), une zone de détection (16), une zone de collecte (22) et une zone de déchets.

14. Dispositif selon l'une des revendications précédentes, **caractérisé en ce qu'**une ou plusieurs zone(s) du groupe suivant de zones intégrées avec la zone d'agitation (11) est/sont formée(s) dans la structure spatiale (10) : la zone de réaction (14), la zone de détection (16), la zone de collecte (22) et la zone de déchets.

15. Dispositif selon l'une des revendications précédentes, **caractérisé en ce qu'**une paroi (12a) de la structure spatiale (10) est chargée avec au moins un réactif supplémentaire réagissant avec l'analyte au moins dans des zones partielles de paroi.

16. Dispositif selon l'une des revendications précédentes, **caractérisé en ce que** l'au moins un réactif réagissant avec l'analyte contient un ou plusieurs composant(s) de réactif du groupe suivant de composants de réactif : colorant luminescent, colorant phosphorescent, colorant d'absorption, particules colorées, anticorps marqués et anticorps avec un groupe capable de se lier pour lier les anticorps à un récepteur correspondant.

17. Dispositif selon l'une des revendications précédentes, **caractérisé en ce qu'**un ou plusieurs réactif(s) pouvant être séparé(s) par l'échantillon est/sont prévu(s) dans la structure spatiale (10), et un réactif est ainsi placé sur le dispositif d'agitation (18) qu'il ne peut essentiellement plus être dissout par le dispositif d'agitation (18) au cours de l'agitation de l'échantillon de liquide.

18. Dispositif selon la revendication 17, **caractérisé en ce que** le ou les réactif(s) pouvant être séparé(s) sont des partenaires de liaison spécifiques à l'analyte et qu'au moins un réactif réagissant avec l'analyte est configuré pour immobiliser l'analyte ou un complexe formé de l'analyte et d'un ou plusieurs réactif(s) pouvant être séparé(s).

19. Procédé de ciblage d'un analyte dans un liquide dans lequel :
- un échantillon du liquide est placé dans une structure spatiale (10) avec une zone d'agitation (11),
- l'échantillon de liquide placé est agité avec un dispositif d'agitation (18) magnétique placé dans la zone d'agitation (11) et pouvant être actionné sans contact, lequel est chargé au moins avec un réactif réagissant avec l'analyte,
- une ou plusieurs section(s) de bande magnétique formant des éléments d'agitation est/sont employée(s) pour agiter le dispositif d'agitation magnétique,
- l'au moins un réactif est au moins partiellement dissout par le dispositif d'agitation lors de l'agitation,
- le réactif dissout est libéré au moins partiellement dans l'échantillon de liquide,
- au moins un réactif réagit avec l'analyte l'échantillon de liquide en formant un produit de réaction et
- l'analyte est ciblé en ce que l'au moins un produit de réaction ou au choix un autre produit de réaction formé au moyen du produit de réaction est détecté.

20. Procédé selon la revendication 19, **caractérisé en ce que** l'au moins un réactif réagissant avec l'analyte est au moins partiellement dissout par zone de couche ou par surface par le dispositif d'agitation (18) au cours de l'agitation de l'échantillon de liquide.

21. Procédé selon la revendication 19 ou 20, **caractérisé en ce que** l'au moins un réactif réagissant avec l'analyte reste au moins partiellement non dissout sur le dispositif d'agitation (18) au cours de l'agitation de l'échantillon de liquide.

22. Procédé selon l'une des revendications 19 à 21, **caractérisé en ce que** dans la structure spatiale (10) sur un réactif immobilisé (21) d'une zone de collecte (22), un ou plusieurs complexe(s) du groupe suivant de complexes est/sont immobilisé(s) : l'analyte, le produit de réaction et l'autre produit de réaction.

23. Procédé selon l'une des revendications 19 à 22, **caractérisé en ce que** l'analyte réagit avec au moins un autre réactif avec lequel une paroi (12a) de la structure spatiale (10) est au moins chargée en zones partielles de paroi.

24. Procédé selon l'une des revendications 19 à 23, **caractérisé en ce que** l'au moins un réactif réagissant avec l'analyte contient un ou plusieurs composant(s) de réactif du groupe suivant de composants de réactif : colorant luminescent, colorant phosphorescent, colorant d'absorption, particules colorées, anticorps marqués et anticorps avec un groupe capable de se lier pour lier les anticorps à un récepteur correspondant.

25. Procédé selon l'une des revendications 19 à 24, **caractérisé en ce que** les mouvements d'agitation du dispositif d'agitation (18) sont entraînés au moins par un champ magnétique.
